# FASCICULE DE BREVET EUROPEEN

(11) **EP 3 887 866 B1**
(45) Date de publication et mention de la délivrance du brevet: **17.01.2024**
(21) Numéro de dépôt: 19783240.5
(22) Date de dépôt: 27.09.2019
(51) Int. Cl.: G01T 1/20

(54) **DETECTEUR PEU-INVASIF DE RAYONNEMENTS IONISANTS**
MINIMAL-INVASIVER DETEKTOR FÜR IONISIERENDE STRAHLUNG
LITTLE-INVASIVE DETECTOR OF IONISING RADIATION

(30) Priorité: 30.11.2018 FR 1872117
(43) Date de publication de la demande: 06.10.2021
(73) Titulaire: CENTRE NATIONAL DE LA RECHERCHE SCIENTIFIQUE, 75016 Paris (FR); UNIVERSITE DE FRANCHE-COMTE, 25000 Besançon (FR)
(72) Inventeur: GROSJEAN, Thierry, 25000 Besançon (FR)
(74) Mandataire: IPAZ
(86) Numéro de dépôt international: PCT/EP2019/076207
(87) Numéro de publication internationale: WO 2020/108827

(56) Documents cités:
- US-A- 5 166 073
- US-A- 5 704 890
- US-A- 5 905 262
- ZHIHUA XIE ET AL: "Ultracompact x-ray dosimeter based on scintillators coupled to a nano-optical antenna", OPTICS LETTERS, vol. 42, no. 7, 28 mars 2017 (2017-03-28), page 1361, XP055615660, US ISSN: 0146-9592, DOI: 10.1364/OL.42.001361

## Description

L'invention concerne un détecteur de rayonnements ionisants à haute énergie, supérieure à 100 eV.

Le domaine de l'invention est le domaine de détection des rayonnements ionisants pour l'imagerie médicale ou industrielle, et plus particulièrement, le domaine des détecteurs peu ou faiblement invasifs, ou à empreinte invasive négligeable.

### ETAT DE LA TECHNIQUE

On connait les détecteurs de rayonnements ionisants comprenant au moins une fibre optique et des scintillateurs, sensibles aux radiations et agencés à une extrémité de la fibre optique. Les scintillateurs, lorsque soumis à un rayonnement ionisant, émettent de la lumière. Ces détecteurs ont pour objet de capter une partie de cette lumière et la dirige par exemple vers une photodiode par le coeur de la fibre. Cependant, ces détecteurs restent encombrants du fait de leur faible sensibilité intrinsèque, en effet ces détecteurs étant de grande taille de façon à augmenter la sensibilité globale.

La demande US5166073A1 divulgue un détecteur de rayonnement ionisant à haute énergie, supérieure à 100eV, comprenant: une fibre optique ayant un diamètre extérieur, dit diamètre de fibre, inférieur à 250 microns, et comprenant un coeur de fibre, une première gaine, dite gaine utile, entourant ledit coeur de fibre et une deuxième gaine, dite gaine de protection, entourant ladite gaine utile, et une couche de scintillateurs prévue pour convertir en lumière ledit rayonnement ionisant. Le détecteur, selon cette demande, comprend en outre une partie, dite de détection, agencée sur une longueur de ladite fibre et comprenant un évidement formé dans la gaine utile, et/ou dans le coeur de fibre; la couche de scintillateurs étant agencée dans ledit évidement en contact avec la gaine utile et le coeur de fibre.

Un but de la présente invention est de proposer un détecteur de rayonnements ionisants moins encombrant.

Un autre but de l'invention est d'améliorer la sensibilité d'un tel détecteur en proposant un nouvel arrangement entre la fibre optique et les scintillateurs.

### EXPOSE DE L'INVENTION

Au moins un des objectifs précités est atteint par un détecteur selon la revendication 1.

Ce détecteur comprend une partie, dite de détection, agencée sur une longueur de la fibre et comprenant un évidement formé dans la gaine de protection, dans la gaine utile, et dans le coeur de fibre ; la couche de scintillateurs étant agencée dans ledit évidement en contact avec la gaine utile et le coeur de fibre.

Avec le détecteur selon l'invention, la couche de scintillateurs est agencée en contact direct avec la gaine utile et le coeur de fibre sur une large surface de contact. Le couplage optique entre la couche de scintillateurs et la fibre optique est ainsi amélioré. Le détecteur est donc plus sensible.

On prévoit également le cas où l'évidement n'est réalisé que dans le coeur de fibre.

L'arrangement du détecteur selon l'invention permet un fort couplage entre la fibre et les scintillateurs, et donc un signal de luminescence plus important en sortie de fibre optique et une sensibilité du détecteur accrue. Cette structure particulière permet d'utiliser des fibres de très petites tailles et donc :
- d'avoir un capteur qui, dans un milieu biologique, n'atténue pas les rayonnements du traitement et ne perturbe pas le processus thérapeutique (notion d'invisibilité), et
- de disposer d'un capteur ultracompact à encombrement très limité.

L'invention permet d'obtenir un détecteur ultracompact sur une fibre optique fine, dont le diamètre utile peut être inférieur à 125 µm, 80 µm, voire 60 µm. Ainsi, le détecteur selon l'invention a une empreinte invasive négligeable pour le patient et est invisible aux processus de thérapies envisagés, quels que soient les types de scintillateurs et de fibres envisagés (organiques ou inorganiques). Le détecteur selon l'invention est considéré comme peu-invasif du fait de sa taille réduite par rapport aux dispositifs de l'art antérieur. De ce fait, il est qualifié de peu-invasif car son utilisation dans le domaine médical par exemple nécessite une lésion de très faible dimension par rapport à l'utilisation des détecteurs existants.

Le détecteur selon l'invention peut être agencé pour détecter des rayons ionisants à une énergie supérieure à 100eV, de préférence entre 0.1MeV et 500MeV.

Dans une version de réalisation du détecteur selon l'invention, la couche de scintillateurs est complètement contenue dans l'évidement et affleure la surface extérieure de la gaine de protection.

Les dimensions du détecteur ne sont pas augmentées par la couche de scintillateurs. Le détecteur selon l'invention est ainsi moins encombrant que les détecteurs de l'état de la technique. La couche de scintillateurs peut combler l'évidement et affleurer la surface extérieure de la gaine utile.

Avantageusement, le détecteur selon l'invention peut comprendre, dans la partie de détection, une couche métallique entourant la couche de scintillateurs.

La couche métallique peut être une couche suffisamment fine pour que les rayons ionisants puissent passer à travers et la luminescence issue des scintillateurs soit réfléchie et redirigée vers la fibre optique.

En particulier, la couche métallique peut être un dépôt d'aluminium et/ou d'or, d'une épaisseur inférieure ou égale à 10 microns, en particulier inférieure ou égale à 300 nm.

Dans un mode de réalisation particulier du détecteur selon l'invention, la partie de détection peut être agencée à l'extrémité de la fibre.

Préférentiellement, la couche de scintillateurs peut s'étendre sur toute l'extrémité de la fibre jusque sur sa section transversale. En d'autres termes, les scintillateurs sont déposés sur la face latérale de la fibre amincie et possiblement sur la section transversale tout en bout de fibre.

La couche métallique peut aussi s'étendre autour de la couche de scintillateurs à l'extrémité de la fibre.

Dans un mode de réalisation particulier du détecteur selon l'invention, la partie de détection peut être agencée à une distance non nulle de l'extrémité de la fibre.

En particulier, la partie de détection peut être agencée à une distance comprise entre 0,1 cm à 1 cm de l'extrémité de la fibre.

En particulier, l'évidement peut s'étendre à l'intérieur du coeur de la fibre de façon à ce que la couche de scintillateurs est en contact direct avec l'intérieur du coeur de fibre.

Dans un mode de réalisation avantageux du détecteur selon l'invention, l'évidement peut s'étendre autour de l'axe de révolution de la fibre.

Avec un tel évidement réalisé tout autour d'une section de la gaine utile, le couplage entre la couche de scintillateurs et la fibre est ainsi amélioré et le détecteur devient isotrope dans le cas où l'évidemment est recouvert d'une couche homogène de scintillateurs. Le caractère isotrope signifie qu'en tournant la fibre selon son axe de révolution, on détecte, sous irradiation par un faisceau ionisant, le même signal. Cette caractéristique est notamment intéressante dans le domaine médical.

Dans un mode de réalisation préféré du détecteur selon l'invention, l'évidement peut former un cône dans la partie de détection.

En particulier, ledit cône peut être agencé à l'extrémité de la fibre et s'étendre dans la gaine utile et le coeur de fibre. Cet agencement améliore le couplage optique entre la couche de scintillateurs et le coeur de fibre. La luminescence, émise par les scintillateurs et dirigée vers la fibre est ainsi augmentée. Le détecteur selon l'invention est donc plus sensible.

Par ailleurs, l'évidement peut former une partie tronconique, dans la partie de détection, agencée à distance de, ou à, l'extrémité de la fibre.

Dans un mode de réalisation du détecteur selon l'invention, l'évidement peut former une partie cylindrique dans la partie de détection ayant un diamètre inférieur au diamètre de fibre.

Le diamètre de la partie cylindrique peut être inférieur ou égal à 80 % du diamètre de fibre.

En particulier, l'évidement peut être réalisé par enlèvement de matière de la gaine utile et du coeur de fibre.

Avantageusement, le diamètre de fibre peut être inférieur ou égal à 250 microns, en particulier inférieur ou égal à 95 microns, plus particulièrement inférieur ou égal à 80 microns, encore plus particulièrement inférieur ou égal à 75 microns.

Préférentiellement, le diamètre du coeur de la fibre est inférieur ou égal à 110 microns, en particulier inférieur ou égal à 70 microns.

Dans un mode de réalisation avantageux, le détecteur selon l'invention peut comprendre un compteur à photons relié à la fibre optique.

Le compteur à photons peut être relié à une extrémité de la fibre opposée à la partie de détection.

La couche de scintillateurs peut être constituée de scintillateurs seuls directement collés à la gaine utile et/ou au coeur de fibre. On peut aussi envisager un collage ou une adhérence par traitement électrostatique des surfaces de la fibre et des scintillateurs.

La couche de scintillateurs peut également être un mélange d'un polymère, par exemple de type photosensible, et de scintillateurs inorganiques, et/ou de scintillateurs organiques, par exemple sous forme de poudres.

Avantageusement, la couche de scintillateurs peut être assemblée à la gaine utile par collage, en particulier par une colle transparente à la luminescence.

En particulier, la partie de détection peut avoir une longueur comprise entre 0,1 mm et 5 mm.

Préférentiellement, l'épaisseur de la couche de scintillateurs peut être inférieure ou égale à 100 microns, en particulier inférieure ou égale à 50 microns.

Suivant un aspect de l'invention, il est proposé un procédé de fabrication d'un détecteur de rayonnement ionisant à haute énergie selon l'invention, comprenant au moins les étapes suivantes :
- amincissement de la fibre optique, sur la partie de détection, par retrait de la gaine de protection et création d'un évidement dans la gaine utile et dans le coeur de la fibre, et
- dépôt d'une couche de scintillateurs dans ledit évidement par photo-polymérisation.

L'amincissement de la fibre par enlèvement de matière dans la gaine utile et éventuellement dans le coeur permet de conserver une bonne rigidité de la fibre nécessaire à son utilisation, comparé aux procédés de l'état de la technique. Le retrait de la gaine de protection peut relever d'une étape préliminaire mettant en jeu un acide différent de celui utilisé pour l'évidement de la gaine utile et éventuellement dans le coeur.

Avantageusement, l'étape de dépôt de la couche de scintillateurs comprend une étape d'illumination de la fibre en UV ou en lumière visible.

En particulier, l'étape d'amincissement peut être réalisée par attaque chimique et peut comprendre les étapes suivantes :
- immersion de la fibre sur une longueur prédéterminée dans une solution prévue pour dissoudre la gaine de protection,
- immersion de la fibre dégainée dans une solution prévue pour dissoudre la gaine utile et le coeur de fibre,
- déplacement vertical (le long de son axe de révolution) de la fibre à une vitesse prédéterminée ou à une succession de vitesses prédéterminées.

La solution pour l'évidement de la gaine utile et du coeur peut être un acide fluorhydrique.

La solution peut être recouverte d'un film liquide (huiles, silicone, etc.) permettant de stabiliser le processus d'évidement aux dimensions et à la géométrie de fibre structurée souhaitée.

La longueur prédéterminée peut être égale à la longueur de la partie de détection.

Une telle réalisation permet d'obtenir une forme conique allongée tronconique variable, ou une autre forme, en fonction de la vitesse appliquée, fixe ou variable ou la combinaison des deux.

Pour obtenir une forme cylindrique (cylindre droit), on plonge la partie de détection de la fibre optique dans un bain contenant ladite solution, en statique, pendant une durée prédéterminée. Cette durée dépend de la profondeur de l'évidement à réaliser. Une durée plus importante peut permettre d'obtenir une forme conique courte lorsque le coeur de fibre est particulièrement attaqué à son extrémité.

Dans un mode de réalisation particulier, l'étape d'amincissement peut être réalisée par polissage de la gaine utile, et éventuellement le coeur de fibre. La gaine de protection est préalablement retirée sur au moins la partie de détection.

Dans un mode de réalisation particulier, le procédé selon l'invention comprend en outre au moins une étape de dépôt d'une couche métallique, suite à l'étape de dépôt de la couche de scintillateurs.

Suivant un aspect de l'invention, il est proposé une sonde endoscopique de détection de rayonnement ionisant à haute énergie comprenant au moins un détecteur selon l'invention.

Dans un mode de réalisation, la sonde selon l'invention peut comprendre une pluralité de détecteurs et les extrémités desdits détecteurs sont agencées dans un même plan.

Dans un mode de réalisation, la sonde selon l'invention peut comprendre une pluralité de détecteurs dont les extrémités sont inscrites dans des plans parallèles séparés par une distance (502) non nulle.

La sonde peut comprendre un nombre compris entre 2 et 20 détecteurs.

Avantageusement, la sonde selon l'invention peut comprendre une caméra CMOS ou une caméra CCD reliée à au moins un, en particulier tous les, détecteur(s).

### DESCRIPTION DES FIGURES ET MODES DE REALISATION

D'autres avantages et caractéristiques apparaîtront à l'examen de la description détaillée d'exemples de réalisation nullement limitatifs, et des dessins annexés sur lesquels :
[Fig. 1a] est une représentation schématique d'une vue de côté en coupe d'un premier exemple d'un détecteur avec une première forme d'évidement ;
[Fig. 1b] est une représentation schématique d'une vue de côté en coupe d'un deuxième exemple d'un détecteur avec une deuxième forme d'évidement ;
[Fig. 1c] est une représentation schématique d'une vue de côté en coupe d'un troisième exemple d'un détecteur avec une troisième forme d'évidement ;
[Fig. 1d] est une représentation schématique d'une vue de côté en coupe d'un quatrième exemple du détecteur selon l'invention avec une quatrième forme d'évidement ;
[Fig. 1e] est une représentation schématique d'une vue de côté en coupe d'un cinquième exemple du détecteur selon l'invention avec une cinquième forme d'évidement ;
[Fig. 2] est une représentation schématique d'un exemple d'une sonde selon l'invention ; et
[Fig. 3] est une représentation schématique d'un exemple du procédé selon l'invention.

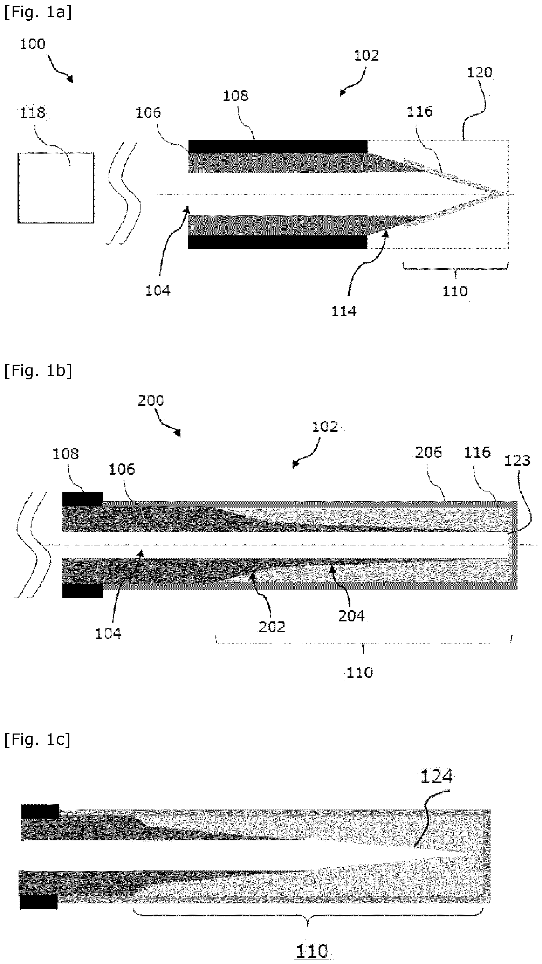

Les FIGURES 1a, 1b, 1c, ne tombant pas dans l'étendue des revendications, sont des représentations schématiques d'une vue de côté en coupe d'exemples d'un détecteur avec plusieurs formes d'évidement.

Le détecteur 100, de la FIGURE 1a, est configuré pour détecter des rayons à une énergie comprise entre 100eV et 500MeV , de préférence entre 0.1MeV et 500MeV.

Le détecteur 100 comprend une fibre optique 102, laquelle comprend un coeur de fibre 104 entouré d'une première gaine 106, dite gaine utile, et une deuxième gaine 108, dite gaine de protection, entourant la gaine utile 106. Le diamètre extérieur de la fibre optique est compris entre 75 microns et 250 microns, en particulier égal à 95 microns. La fibre optique 102 peut avoir une longueur supérieure à 1 m.

La fibre optique 102 comprend une partie, 110, dite de détection, agencée à son extrémité. La partie de détection 110 s'étend sur une longueur comprise entre 0,1 mm et 5 mm, en particulier égale à 5 mm et comprend un évidement de sorte que l'extrémité de la fibre optique 102 forme un cône 114, pointant vers l'extérieur. L'évidement 120 correspond à la partie de la fibre optique qui a été retirée. Le cône 114 est formé par enlèvement de matière de la gaine de protection 108, de la gaine utile 106 et du coeur de fibre 104.

La gaine de protection 108 est retirée dans une étape préalable. Elle peut par exemple être retirée à l'aide d'un acide sulfurique qui va attaquer cette gaine sans dégrader le reste de la fibre à savoir le coeur 104 et la gaine utile 106. D'autres solutions existent, soit par attaque chimique soit par retrait mécanique.

Le détecteur 100 comprend en outre, dans la partie de détection 110, une couche de scintillateurs 116 agencée en contact avec la gaine utile 106 et le coeur de fibre 104. La couche de scintillateurs 116 a une épaisseur comprise entre 20 microns et 100 microns, en particulier égale 50 microns.

La couche de scintillateurs épouse la forme conique de la pointe en recouvrant complètement la surface extérieure du coeur de fibre 104, surface extérieure mise à nue par la réalisation de l'évidement 120. La couche de scintillateurs s'étend également jusqu'à recouvrir partiellement la surface extérieure de la gaine utile 106, surface extérieure mise à nue par la réalisation de l'évidement 120.

La couche de scintillateurs 116 est formée en trempant la partie de détection de la fibre optique dans un mélange polymère/scintillateurs, pendant la polymérisation. Le polymère permet d'agglomérer les scintillateurs et sert de colle.

La partie de détection 110 en forme de cône 114 offre une grande surface de contact entre la couche de scintillateurs 116 d'une part et la gaine utile 106 et le coeur de fibre 104 d'une autre part. Cela améliore grandement le couplage optique. La luminescence, émise par la couche de scintillateurs 116 et dirigée vers la fibre est ainsi augmentée par rapport à des dispositifs où les scintillateurs sont disposés en bout de fibre coupée orthogonalement à l'axe de révolution.

De plus le cône 114 formé dans la partie de détection 110 permet de conserver une bonne rigidité de la fibre optique nécessaire à son utilisation.

Le détecteur 100 comprend aussi un compteur à photons 118 reliée à la fibre optique 102 et configuré pour mesurer une quantité de lumière émise par la couche de scintillateurs 116 et dirigée par le coeur de fibre 104.

La FIGURE 1b est une représentation schématique d'un détecteur 200 vue de côté en coupe. Le détecteur 200 comprend les mêmes éléments que le détecteur 100 de la FIGURE 1a mais de formes différentes. Sur une partie de l'extrémité de la fibre optique 102, la gaine de protection est retirée laissant à nue la gaine utile 106. Sur une partie de détection 110, la gaine utile 106 a subit une attaque chimique permettant de former un premier tronc de cône 202, sans pointe. Le coeur de fibre n'est pas mis à nu à cet endroit. Ensuite, un second tronc de cône 204 plus allongé que le premier, et d'un angle solide plus petit que l'angle solide du premier tronc de cône, est créé à la suite du premier tronc de cône. Ainsi, l'épaisseur de la gaine utile s'amincit jusqu'à disparaître à une extrémité 123 où le coeur de fibre est coupé à angle droit. Ainsi, la partie de détection 110 a été créée par création d'un évidement de forme complexe s'étendant de la gaine de protection 108 jusqu'à la gaine utile 106. Dans cet exemple d'arrangement, la couche de scintillateurs recouvre et est en contact direct avec le bout du coeur de fibre, sur toute sa section radiale.

La couche de scintillateurs 116 est agencée autour de la gaine utile 106 en contact avec la surface externe des premier et second troncs de cône 202 et 204. La couche de scintillateurs affleure la surface externe de la partie de la gaine utile non attaquée.

Le détecteur 200 comprend aussi une fine couche métallique 206 réalisée autour de la couche de scintillateurs 106. La couche métallique 206 est un dépôt en aluminium (Al) ou en or (Au) d'une épaisseur inférieure à 200 nm. La couche métallique 206 permet de réfléchir la lumière émise par la couche de scintillateurs 116 et la diriger vers le coeur de fibre 104. Le détecteur 200 est ainsi plus sensible.

La figure 1c décrit un détecteur qui reprend la même configuration que le détecteur 200 de la figure 1b mais à la seule différence que l'extrémité de coeur de fibre n'est pas coupée à angle droit mais s'étend en pointe 124.

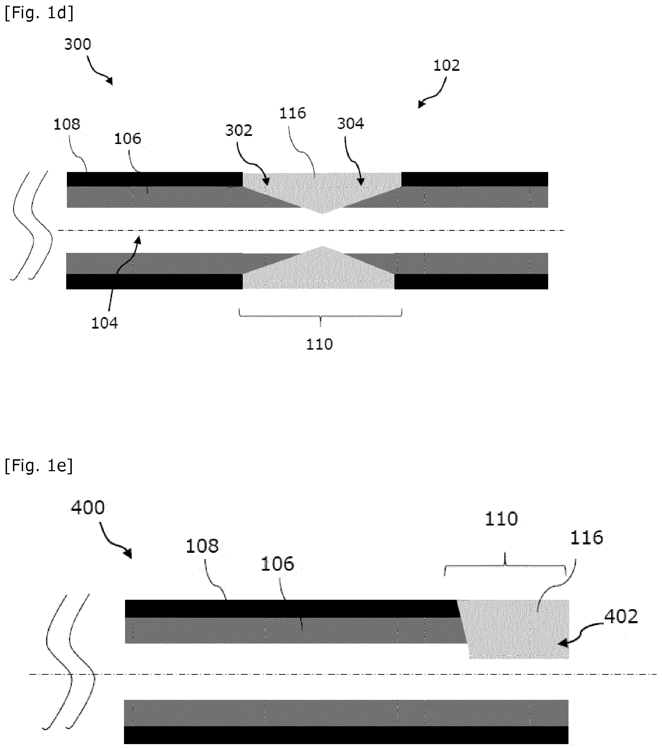

La FIGURE 1d est une représentation schématique d'un détecteur 300 vue de côté en coupe. Le détecteur 300 comprend les mêmes éléments que le détecteur 100 de la FIGURE 1a. A la différence, la partie de détection 110 du détecteur 300 est agencée à une distance de l'extrémité de la fibre optique 102 comprise entre 2 mm et 10 cm, en particulier égale à 1 cm. Cet agencement permet de conserver une bonne rigidité de la fibre optique 102 malgré la réalisation d'un évidement et le dépôt d'une couche des scintillateurs dans la gaine de protection 108, la gaine utile 106 et dans le coeur de fibre 104.

De plus, l'évidement du détecteur 300 forme deux parties tronconiques 302 et 304 opposées entre elles, têtes bêches, de sorte qu'un sillon est réalisée dans le coeur de fibre. La couche de scintillateurs 116 remplit complètement l'évidement réalisé et affleure la surface extérieure de la gaine de protection 108.

La FIGURE 1e est une représentation schématique d'un détecteur 400 vue de côté en coupe. Le détecteur 400 comprend les mêmes éléments que le détecteur 100 de la FIGURE 1a. A la différence, l'évidement est de la forme d'un méplat 402 agencé à l'extrémité de la fibre optique 102 et uniquement sur un segment. Sur la partie de détection 110, l'évidement est creusé de la gaine de protection 108, via la gaine utile 106 et jusqu'à une partie du coeur de fibre. La couche de scintillateurs 116 remplit complètement l'évidement réalisé.

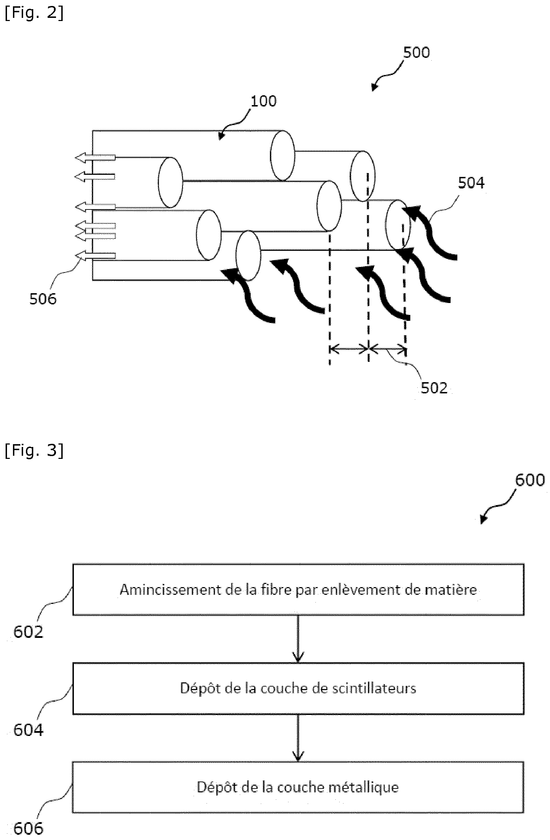

La FIGURE 2 est une représentation schématique d'un exemple de la sonde selon l'invention.

La sonde 500 comprend une pluralité de détecteurs 100 agencés en bundle. A titre d'exemple, la sonde 500 peut comprendre un arrangement d'un même type de détecteurs ou de différents types de détecteurs parmi les détecteurs 100, 200, 300 et 400.

Sur la figure 2, les extrémités des détecteurs 100 sont séparées les unes des autres par une distance 502 constante ou variable comprise entre 0.5 cm et 10 cm.

Les couches de scintillateurs 116 des détecteurs 100 émettent de la lumière 506 lorsque la sonde 500 est soumise à des rayons ionisants 504. Cette lumière 506 est captée par les coeurs de fibre 104 et est dirigée vers une caméra (CCD, CMOS, ou autre) reliée aux détecteurs 100.

En d'autres termes, sous-irradiation, la fine couche scintillante 116 émet une luminescence collectée et transférée par la fibre optique vers un détecteur optique placé à distance, à l'autre extrémité de la fibre optique.

Ce mode de réalisation peut avantageusement s'appliquer au cas d'une sonde constituée de plusieurs détecteurs de même type ou de différents types parmi les détecteurs 100, 200, 300 et 400.

FIGURE 3 est une représentation schématique d'un exemple du procédé selon l'invention.

Le procédé 600 est un procédé de fabrication d'un détecteur 100, 200, 300 et/ou 400.

Le procédé 600 comprend une étape d'amincissement 602 de la fibre optique 102, sur la partie de détection, par enlèvement de matière de la gaine de protection 108 et de la gaine utile 106 et du coeur de fibre 102 de sorte à former l'évidement dans la fibre optique 102.

L'étape d'amincissement 602 comprend au moins une étape immersion de la fibre optique 102 sur sa partie de détection 110 dans une solution prévue pour dissoudre la gaine de protection 108, la gaine utile 106 et le coeur de fibre 102.

Le procédé 600 comprend aussi une étape de dépôt 604 de la couche de scintillateurs 116 dans ledit évidement par photo-polymérisation. L'étape de dépôt 604 comprend une étape d'illumination de la fibre optique 102 en UV ou en lumière visible.

Le procédé 600 peut comprendre aussi une étape de dépôt 608 de la couche métallique 206, par exemple par pulvérisation ou évaporation d'un métal tel que l'aluminium ou l'or.

La structuration à l'extrémité de fibre selon la présente invention permet la collection et le transfert d'un maximum de luminescence vers la fibre optique.

La forme amincie de la fibre optique (« taper » en anglais) favorise la collection de la luminescence. Cela permet :
- une accroche satisfaisante des scintillateurs sur la fibre optique,
- une homogénéisation de l'efficacité de collection de la luminescence sur toute la longueur de fibre recouverte par la couche scintillante, d'où une optimisation de la sensibilité de la sonde au vu du faible rendement d'émission des scintillateurs sous irradiation.

La miniaturisation peut permettre d'obtenir des capteurs in vivo ultracompacts et invisibles, c'est-à-dire, limitant à moins de 1% l'atténuation du rayonnement dans un milieu biologique ou équivalent eau.

C'est par l'amélioration du couplage scintillateur-fibre qu'il est possible de réduire le diamètre de la fibre optique. Cela peut ainsi permettre la réalisation de multi-capteurs suffisamment étroits pour être compatibles avec l'endoscopie notamment.

L'invention s'applique avantageusement à la réalisation de capteurs, constitué d'une ou plusieurs sondes fibrées selon l'invention, pour notamment la dosimétrie in vivo en temps réel de rayonnements ionisants. La présente invention peut avoir des applications dans le domaine de la thérapie médicale : radiothérapie à faisceau externe, protonthérapie, hadronthérapie, brachythérapie (ou Curie thérapie), etc.

Bien sûr, l'invention n'est pas limitée aux exemples qui viennent d'être décrits et de nombreux aménagements peuvent être apportés à ces exemples sans sortir du cadre de l'invention, qui est définie par les revendications.

## Revendications

1. Détecteur (100;200;300;400) de rayonnement ionisant (504) à haute énergie, supérieure à 100 eV, comprenant :
- une fibre optique (102) ayant un diamètre extérieur, dit diamètre de fibre, inférieur à 250 microns, et comprenant un coeur de fibre (104), une première gaine (106), dite gaine utile, entourant ledit coeur de fibre (104) et une deuxième gaine (108), dite gaine de protection, entourant ladite gaine utile (106), et
- une couche de scintillateurs (116) prévue pour convertir en lumière (506) ledit rayonnement ionisant (504) ;
- une partie (110), dite de détection, agencée sur une longueur de ladite fibre (102) et comprenant un évidement (120) formé dans la gaine de protection (108), dans la gaine utile (106), et dans le coeur de fibre ; la couche de scintillateurs (116) étant agencée dans ledit évidement en contact avec la gaine utile (106) et le coeur de fibre(104),
**caractérisé en ce que** l'évidement s'étend au moins en partie à l'intérieur du coeur de la fibre (104) de façon à ce que la couche de scintillateurs est en contact direct avec l'intérieur du coeur de fibre et avec la gaine de protection (108).

2. Détecteur (100;200;300;400) selon la revendication précédente, **caractérisé en ce que** la couche de scintillateurs (116) est complètement contenue dans l'évidement et affleure la surface extérieure de la gaine de protection.

3. Détecteur (200) selon l'une quelconque des revendications précédentes, **caractérisé en ce qu'**il comprend, dans la partie de détection (110), une couche métallique (206) entourant la couche de scintillateurs (116).

4. Détecteur (100;200;400) selon l'une quelconque des revendications précédentes, **caractérisé en ce que** la partie de détection est agencée à l'extrémité de la fibre.

5. Détecteur (100;200) selon la revendication précédente, **caractérisé en ce que** la couche de scintillateurs (116) s'étend sur toute l'extrémité de la fibre (102) jusque sur sa section transversale.

6. Détecteur (300) selon l'une quelconque des revendications 1 à 3, **caractérisé en ce que** la partie de détection (110) est agencée à une distance non nulle de l'extrémité de la fibre (102).

7. Détecteur (100;200;300) selon l'une quelconque des revendications précédentes, **caractérisé en ce que** l'évidement s'étend autour d'un axe de révolution de la fibre (102).

8. Détecteur (100;200;300) selon la revendication précédente, **caractérisé en ce que** l'évidement forme un cône dans la partie de détection (110).

9. Détecteur (100;200;300;400) selon l'une quelconque des revendications précédentes, **caractérisé en ce qu'**il comprend un compteur (118) à photons relié à la fibre optique (102).

10. Procédé (600) de fabrication d'un détecteur (100;200;300;400) de rayonnement ionisant (504) à haute énergie selon l'une quelconque des revendications précédentes, comprenant au moins les étapes suivantes :
- amincissement (602) de la fibre optique (102), sur la partie de détection (110), par retrait de la gaine de protection (108) et création d'un évidement dans la gaine utile (106) et dans le coeur de la fibre (104), et
- dépôt (604) d'une couche de scintillateurs (116) dans ledit évidement par photo-polymérisation de façon à ce que la couche de scintillateurs est en contact direct avec l'intérieur du coeur de fibre et avec la gaine de protection.

11. Procédé (600) selon la revendication précédente, **caractérisé en ce que** l'étape d'amincissement (602) est réalisée par attaque chimique et comprend les étapes suivantes :
- immersion de la fibre (102) sur une longueur prédéterminée dans une solution prévue pour dissoudre la gaine de protection (108),
- immersion de la fibre déaainée dans une solution prévue pour dissoudre la gaine utile et le coeur de fibre,
- déplacement vertical de la fibre (102) à une vitesse prédéterminée ou à une succession de vitesses prédéterminées.

12. Sonde (500) endoscopique de détection de rayonnement ionisant (504) à haute énergie comprenant au moins un détecteur (100;200;300;400) selon l'une quelconque des revendications 1 à 9.

13. Sonde selon la revendication précédente, **caractérisée en ce qu'**elle comprend une pluralité de détecteurs (100;200;300;400) et les extrémités desdits détecteurs (100;200;300;400) sont agencées dans un même plan.

14. Sonde (500) selon la revendication 12, **caractérisée en ce qu'**elle comprend une pluralité de détecteurs (100;200;300;400) dont les extrémités sont inscrits dans des plans parallèles séparés par une distance (502) non nulle.

## Patentansprüche

1. Detektor (100; 200; 300; 400) für ionisierende Strahlung (504) mit hoher Energie, die größer als 100 eV ist, enthaltend:
- eine optische Faser (102) mit einem Außendurchmesser, Faserdurchmesser genannt, von weniger als 250 Mikrometer und mit einem Faserkern (104), einer ersten Hülle (106), Nutzhülle genannt, die den Faserkern (104) umgibt, und einer zweiten Hülle (108), Schutzhülle genannt, die die Nutzhülle (106) umgibt, und
- eine Szintillatorschicht (116), die dazu vorgesehen ist, die ionisierende Strahlung (504) in Licht (506) umzuwandeln;
- einen Abschnitt (110), Detektorabschnitt genannt, der über eine Länge der Faser (102) angeordnet ist und eine Aussparung (120) umfasst, die in der Schutzhülle (108), in der Nutzhülle (106) und in dem Faserkern ausgebildet ist;
wobei die Szintillatorschicht (116) in der Aussparung in Kontakt mit der Nutzhülle (106) und dem Faserkern (104) angeordnet ist,
**dadurch gekennzeichnet, dass** sich die Aussparung zumindest teilweise im Inneren des Faserkerns (104) erstreckt, so dass die Szintillatorschicht direkt in Kontakt mit dem Inneren des Faserkerns und mit der Schutzhülle (108) steht.

2. Detektor (100; 200; 300; 400) nach dem vorhergehenden Anspruch, **dadurch gekennzeichnet, dass** die Szintillatorschicht (116) vollständig in der Aussparung enthalten ist und bündig mit der Außenfläche der Schutzhülle abschließt.

3. Detektor (200) nach einem der vorhergehenden Ansprüche, **dadurch gekennzeichnet, dass** er im Detektorabschnitt (110) eine Metallschicht (206) umfasst, von der die Szintillatorschicht (116) umgeben ist.

4. Detektor (100; 200; 400) nach einem der vorhergehenden Ansprüche, **dadurch gekennzeichnet, dass** der Detektorabschnitt am Ende der Faser angeordnet ist.

5. Detektor (100; 200) nach dem vorhergehenden Anspruch, **dadurch gekennzeichnet, dass** sich die Szintillatorschicht (116) über das gesamte Ende der Faser (102) bis hin zu deren Querschnitt erstreckt.

6. Detektor (300) nach einem der Ansprüche 1 bis 3, **dadurch gekennzeichnet, dass** der Detektorabschnitt (110) in einem Abstand ungleich Null vom Ende der Faser (102) angeordnet ist.

7. Detektor (100; 200; 300) nach einem der vorhergehenden Ansprüche, **dadurch gekennzeichnet, dass** sich die Aussparung um eine Rotationsachse der Faser (102) erstreckt.

8. Detektor (100; 200; 300) nach dem vorhergehenden Anspruch, **dadurch gekennzeichnet, dass** die Aussparung im Detektorabschnitt (110) einen Konus bildet.

9. Detektor (100; 200; 300; 400) nach einem der vorhergehenden Ansprüche, **dadurch gekennzeichnet, dass** er einen Photonenzähler (118) umfasst, der mit der optischen Faser (102) verbunden ist.

10. Verfahren (600) zur Herstellung eines Detektors (100; 200; 300; 400) für hochenergetische ionisierende Strahlung (504) nach einem der vorhergehenden Ansprüche, umfassend zumindest die folgenden Schritte:
- Ausdünnen (602) der optischen Faser (102) am Detektorabschnitt (110) durch Entfernen der Schutzhülle (108) und Bilden einer Aussparung in der Nutzhülle (106) und im Faserkern (104), und
- Aufbringen (604) einer Szintillatorschicht (116) in der Aussparung durch Photopolymerisation derart, dass die Szintillatorschicht direkt in Kontakt mit dem Inneren des Faserkerns und mit der Schutzhülle steht.

11. Verfahren (600) nach dem vorhergehenden Anspruch, **dadurch gekennzeichnet, dass** der Schritt des Ausdünnens (602) durch Ätzen erfolgt und die folgenden Schritte umfasst:
- Eintauchen der Faser (102) über eine vorbestimmte Länge in eine Lösung, die zum Auflösen der Schutzhülle (108) vorgesehen ist,
- Eintauchen der enthüllten Faser in eine Lösung, die zum Auflösen der Nutzhülle und des Faserkerns vorgesehen ist,
- vertikales Verschieben der Faser (102) mit einer vorbestimmten Geschwindigkeit oder einer Folge von vorbestimmten Geschwindigkeiten.

12. Endoskopische Sonde (500) zur Erfassung hochenergetischer ionisierender Strahlung (504) mit zumindest einem Detektor (100; 200; 300; 400) nach einem der Ansprüche 1 bis 9.

13. Sonde nach dem vorhergehenden Anspruch, **dadurch gekennzeichnet, dass** sie eine Mehrzahl von Detektoren (100; 200; 300; 400) umfasst und die Enden der Detektoren (100; 200; 300; 400) in derselben Ebene angeordnet sind.

14. Sonde (500) nach Anspruch 12, **dadurch gekennzeichnet, dass** sie eine Mehrzahl von Detektoren (100; 200; 300; 400) umfasst, deren Enden in parallelen Ebenen eingeschrieben sind, die durch einen Abstand (502) ungleich Null getrennt sind.

## Claims

1. Detector (100;200;300;400) for high-energy ionizing radiation (504), greater than 100 eV, comprising:
- an optical fibre (102) having an outer diameter, called fibre diameter, less than 250 microns, and comprising a fibre core (104), a first cladding (106), called useful cladding, surrounding said fibre core (104) and a second cladding (108), called protective cladding, surrounding said useful cladding (106), and
- a layer of scintillators (116) provided to convert said ionizing radiation (504) into light (506);
- a portion (110), called detection portion, arranged over a length of said fibre (102) and comprising a recess (120) formed in the protective cladding (108), in the useful cladding (106) and in the fibre core; the layer of scintillators (116) being arranged in said recess in contact with the useful cladding (106) and the fibre core (104),
**characterized in that** the recess extends at least in part inside the core of the fibre (104) so that the layer of scintillators is in direct contact with the inside of the fibre core and with the protective cladding (108).

2. Detector (100;200;300;400) according to the preceding claim, **characterized in that** the layer of scintillators (116) is completely contained in the recess and is flush with the outer surface of the protective cladding.

3. Detector (200) according to any one of the preceding claims, **characterized in that** it comprises, in the detection portion (110), a metallic layer (206) surrounding the layer of scintillators (116).

4. Detector (100;200;400) according to any one of the preceding claims, **characterized in that** the detection portion is arranged at the end of the fibre.

5. Detector (100;200) according to the preceding claim, **characterized in that** the layer of scintillators (116) extends over the whole end of the fibre (102) onto its transverse section.

6. Detector (300) according to any one of claims 1 to 3, **characterized in that** the detection portion (110) is arranged at a non-zero distance from the end of the fibre (102).

7. Detector (100;200;300) according to any one of the preceding claims, **characterized in that** the recess extends around an axis of revolution of the fibre (102).

8. Detector (100;200;300) according to the preceding claim, **characterized in that** the recess forms a cone in the detection portion (110).

9. Device (100;200;300;400) according to any one of the preceding claims, **characterized in that** it comprises a photon counter (118) connected to the optical fibre (102).

10. Method (600) for manufacturing a detector (100;200;300;400) for high-energy ionizing radiation (504) according to any one of the preceding claims, comprising at least the following steps:
- thinning (602) the optical fibre (102), over the detection portion (110), by removing the protective cladding (108) and creating a recess in the useful cladding (106) and in the core of the fibre (104), and
- depositing (604) a layer of scintillators (116) in said recess by photopolymerization so that the layer of scintillators is in direct contact with the inside of the fibre core and with the protective cladding.

11. Method (600) according to the preceding claim, **characterized in that** the thinning step (602) is carried out by chemical etching and comprises the following steps:
- immersing the fibre (102) over a predetermined length in a solution provided to dissolve the protective cladding (108),
- immersing the unclad fibre in a solution provided to dissolve the useful cladding and the fibre core,
- vertically displacing the fibre (102) at a predetermined speed or at a succession of predetermined speeds.

12. Endoscopic probe (500) for detecting high-energy ionizing radiation (504) comprising at least one detector (100;200;300;400) according to any one of claims 1 to 9.

13. Probe according to the preceding claim, **characterized in that** it comprises a plurality of detectors (100;200;300;400) and the ends of said detectors (100;200;300;400) are arranged in one and the same plane.

14. Probe (500) according to claim 12, **characterized in that** it comprises a plurality of detectors (100;200;300;400) the ends of which are inscribed in parallel planes separated by a non-zero distance (502).
